# EUROPEAN PATENT APPLICATION

(11) **EP 0 617 411 A2**
(43) Date of publication of application: **28.09.1994**
(21) Application number: 94104470.3
(22) Date of filing: 22.03.1994
(51) Int. Cl.: G11B 5/48, G11B 21/16

(54) **Methods for making damped load beams**

(30) Priority: 24.03.1993 US 36448
(71) Applicant: MINNESOTA MINING AND MANUFACTURING COMPANY, St. Paul, Minnesota 55133-3427 (US)
(72) Inventor: Peterson, Robert K., c/o Minnesota Mining and, St. Paul, Minnesota 55133-3427 (US)
(74) Representative: Hilleringmann, Jochen, Dipl.-Ing.

(57) **Abstract**

A damped load beam for a suspension assembly comprises a load beam and a damping structure. The damping structure comprises a layer of damping material bonded to the load beam and a relatively stiff constraining layer bonded to the damping material. The damped load beam includes undamped, opposed ends that are suitable for supporting other components associated with the suspension assembly. The method comprises the steps of providing clean, flat stock material for the constraining layer, applying a layer of damping material to at least a portion of the constraining layer stock material, providing clean, flat stock material for the load beam, and bonding the damping material to only a portion of the load beam stock material. A flat sandwich construction comprising the damping material intermediate the constraining layer stock material and only a portion of the load beam stock material results. The damped load beam is formed by stamping or chemically etching the flat sandwich construction such that a portion of the load beam stock material that does not have damping material thereon provides the undamped opposed end(s) of the load beam.

## Description

### BACKGROUND OF THE INVENTION

### Field of the Invention

This invention relates to methods for making damped load beams useful in controlling resonant vibrational forces in electromechanical devices such as suspension assemblies associated with magnetic and optical recording systems.

### Description of the Related Art

The present invention has particular utility in the manufacture of magnetic recording devices such as found in hard disk drive computer systems. Magnetic disk drives operate by "reading" information from or "writing" information to a magnetic disk by way of a head slider which carries magnetic transducers.

In typical constructions a magnetic head arm supports a magnetic head suspension assembly. The suspension assembly includes a load beam having a mounting block at one end thereof and a flexure (such as a gimbal spring) cantilevered from the opposite end. The flexure supports a head slider.

In general, maximum recording system performance requires that the head slider be accurately positioned in space over the data track of interest. Vibrations, whether they cause bending, sway or torsion of the head or the load beam that carries the head, can move the head out of position thereby deteriorating the performance of the recording system.

One approach which has been suggested for reducing the effect of vibrations is to incorporate a constrained layer damping element onto the load beam. Such a construction is shown in U.S. Pat. No. 4,760,478 "Visco-elastically Damped Magnetic Head Suspension Assembly" issued July 26, 1988 to G. Pal et al. The damping material and constraining layer are reportedly applied to the load beam as a pressure sensitive adhesive tape in a separate operation using heat and pressure.

Another damped construction is disclosed in U.S. Pat. No. 5,187,625 "Laminated Load Beam" issued February 16, 1993, to D. Blaeser et al. Several different methods of assembly are described. In one approach, a three layer sandwich construction comprising a viscoelastic material intermediate top and bottom metal layers is etched to form individual load beams that are subsequently processed through standard forming (e.g., bending) techniques. In another approach, the top and bottom metal layers are stamped or etched separately and viscoelastic material, in either spray or tape form, is applied to one of the metal layers. The other metal layer is used to form a three layer sandwich construction with the viscoelastic material as the middle layer.

### SUMMARY OF THE INVENTION

This invention relates to methods for making damped load beams for a suspension assembly. The damped load beam comprises a load beam and a damping structure attached thereto. The damping structure comprises a layer of damping material bonded to the load beam and a relatively stiff constraining layer bonded to the damping material. The damped load beam has opposed ends, at least one of which is undamped. The undamped, opposed end(s) are suitable for supporting other components associated with the suspension assembly.

In one embodiment of the invention, the method comprises the steps of providing clean, flat stock material for the constraining layer, applying a layer of damping material to at least a portion of the constraining layer stock material, providing clean, flat stock material for the load beam, and bonding the damping material to only a portion of the load beam stock material. A flat sandwich construction comprising the damping material intermediate the constraining layer stock material and only a portion of the load beam stock material results. The damped load beam is formed from the flat sandwich construction. A portion of the load beam stock material that does not have damping material thereon provides the undamped, opposed end(s) of the load beam. "Stock material" refers to larger pieces of material out of which smaller end products, and preferably a plurality of smaller end products, are formed. Thus, the disclosed methods are particularly well suited for high volume, commercial scale, mass production manufacturing operations.

The damping material may be applied to the constraining layer stock material by coating or lamination. The width of the damping material on the constraining layer stock is preferably substantially equal to the length of the damping material between the opposed ends of the finished load beam.

The constraining layer stock with the damping material thereon may be slit before being bonded to the load beam stock. Similarly, the flat sandwich construction may be slit into a plurality of unit width or multiple width members. Preferably, the resulting members are elongated strips that are stamped to form one or more load beams. Alternatively, the flat sandwich construction (or members obtained by slitting the flat sandwich construction) can be chemically etched to provide the load beams.

In another method according to the invention, the damping material and the constraining layer may be bonded to the load beam stock material in a plurality of parallel, spaced apart stripes. The load beam stock can be subsequently slit between some of or all of the stripes to provide flat sandwich construction members that are stamped or chemically etched to form the load beams.

In a third method according to the invention, the flat sandwich construction may be formed by providing clean, flat stock material for the load beam, applying the damping material to the load beam stock material in a series of parallel, spaced apart stripes, and bonding strips of clean, flat constraining layer stock material to the damping material. The flat sandwich construction can then be slit between the stripes of a damping material to provide individual flat, sandwich construction members that are stamped or chemically etched to form the load beams.

The methods of the invention may comprise the further step of attaching additional system components (such as mounting blocks and flexures) to one or both of the undamped ends of the load beam, preferably by laser welding.

Manufacturing techniques according to the invention permit secure bonds between the load beam and the damping material because the damping material is applied before the ultimate load beam is formed. Accurate placement of the damping structure on the load beam is also possible. It is believed that enhanced production yields, lower assembly costs, better bond strength, and reduced product variability will result from the production methods disclosed herein.

### BRIEF DESCRIPTION OF THE DRAWINGS

The invention will be more fully appreciated with reference to the following drawings in which similar reference numerals designate like or analogous components throughout and in which:
FIG. 1 is a perspective view of a magnetic head arm assembly;
FIG. 2 is a bottom plan view of the magnetic head arm assembly of FIG. 1;
FIG. 3 is a top plan view of the magnetic head arm assembly of FIG. 1;
FIG. 4 is a sectional view taken along lines 4--4 of FIG. 2;
FIGS. 5A, 5B and 5C are schematic plan views sequentially illustrating a unit width manufacturing method according to the invention, a portion of FIG. 5B having been broken away;
FIG. 5D is a schematic plan view similar to FIG. 5C but showing a multiple width manufacturing method;
FIG. 6 is a top plan view of a magnetic head arm assembly illustrating selective application of damping material thereto;
FIG. 7A is a schematic plan view showing a method of manufacturing the magnetic head arm assembly of FIG. 6;
FIG. 7B is a schematic plan view showing an alternative method of manufacturing the magnetic head arm assembly of FIG. 6; and
FIGS. 8A, 8B and 8C are schematic plan views sequentially illustrating an alternative manufacturing method according to the invention, a portion of FIGS. 8B and 8C having been broken away.

### DETAILED DESCRIPTION OF THE PREFERRED EMBODIMENTS

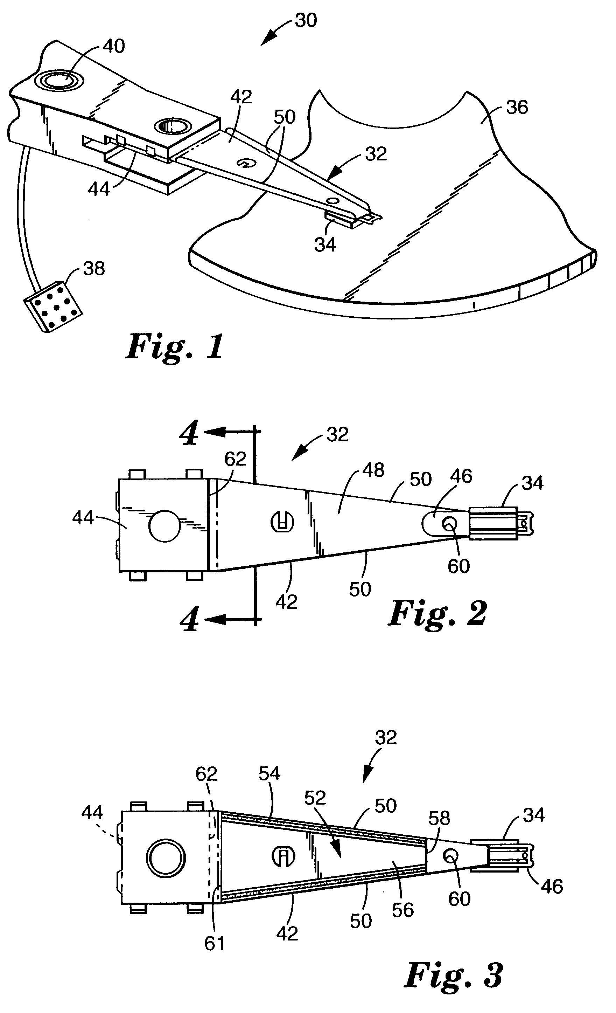

Turning now to the drawings, FIG. 1 illustrates a magnetic head arm 30 that includes a magnetic head suspension assembly 32. The magnetic head suspension assembly supports a head slider 34 at one end thereof. Head slider 34 carries one or more magnetic transducer means which are in a transducing relationship with magnetic disk 36 that rotates beneath the head slider. Information is "read" from or "written" to the magnetic disk through the head slider by way of electrical and magnetic signals. The signals are conducted from head slider 34 to a plug connector assembly 38 for use by the host computer system. Magnetic head arm 30 is mounted by, for example, post 40 to suitable support and positioning means (not shown separately in the drawings).

Magnetic head suspension assembly 32 is shown in greater detail in FIGS. 2 to 4 and comprises a load beam 42 having a mounting block 44 secured to one end thereof and a flexure 46, such as a gimbal spring, cantilevered from an opposite end thereof. Flexure 46 supports head slider 34. A wide variety of magnetic head suspension assemblies is known. For example, Hutchinson Technology, Incorporated (Hutchinson, Minnesota) commercially offers many suspension assemblies, such as types 2, 3, 4, 7, 12, 13, 14, 15 and 16. Accordingly, the magnetic head suspension assembly shown in the drawing figures is merely illustrative.

Load beam 42 is shown as a channel-shaped member comprising an elongated web 48 having a pair of opposed, upturned flanges 50 which extend outwardly from and along longitudinal edges of the web. However, the load beam may comprise a flat platelike member that includes a web but no flanges. Stainless steel is the preferred material of construction for the load beam.

Suspension assembly 30 further includes a constrained layer damping structure 52 that reduces the amplitude of resonant frequency vibrations. Constrained layer damping structure 52 comprises a damping material 54 bonded to load beam 42 and a relatively stiff constraining layer 56 bonded to the damping material. Thus load beam 42 is damped.

Useful damping materials include urethane rubbers, silicone rubbers, nitrile rubbers, butyl rubbers, acrylic rubbers, natural rubbers and styrene-butadiene rubbers. Other examples of useful damping materials include acrylic-based viscoelastic materials, more preferably, those which are based on acrylates. Useful viscolastic damping materials include SCOTCHDAMP ISD 110, SCOTCHDAMP ISD 112 and SCOTCHDAMP ISD 113 (3M Company, St. Paul, Minnesota). In general, any suitable viscoelastic material may be used. There are no particular limitations on the thickness of the damping material although thicknesses in the range of about 25 to 380 microns (µm) are preferred.

Constraining layer 56 is a relatively stiff material and may be formed from a variety of metals or stiff polymers. A particularly preferred material is stainless steel. The stiffness of the constraining layer may be adjusted by varying the thickness thereof. Thicknesses in the range of about 10 to 255 µm are preferred.

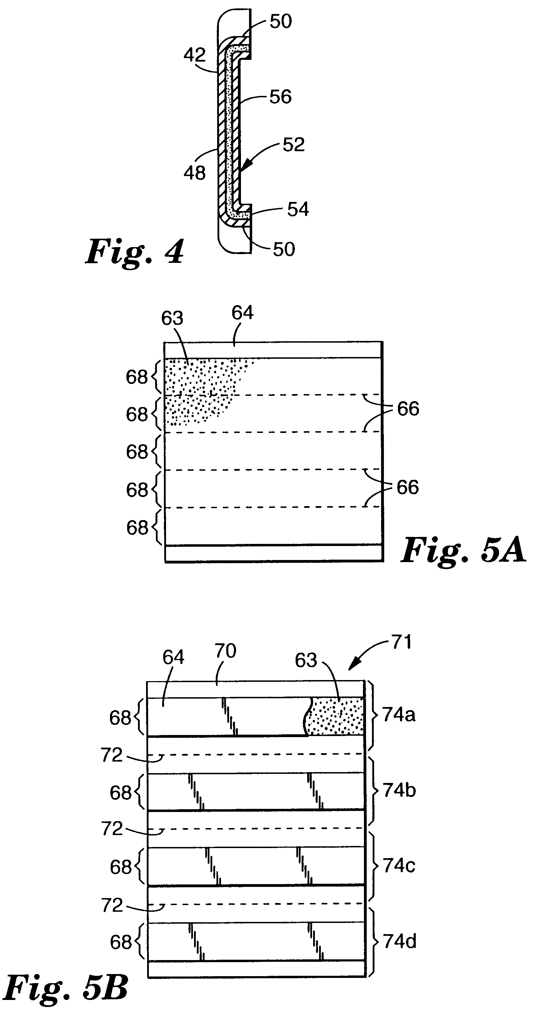

With reference to FIG. 4, constrained layer damping structure 52 is secured to both web 48 and flanges 50 of load beam 42. Alternatively, damping material 54 may be provided on web 48 and flanges 50 while constraining layer 56 is provided on only the web, the flanges, or both the web and the flanges. Thus the width of the damping material layer may be greater than, less than, or substantially equal to the width of the constraining layer. Damping structure 52 may be provided on the exterior surfaces of web 48 and flanges 50 (as opposed to the interior facing surfaces as illustrated in FIG. 4) or both the interior and exterior surfaces. The damping material used on the interior and exterior surfaces of the load beam may be the same or may be different.

While the damping structure on any one side of the load beam has been illustrated as comprising a single layer of damping material in conjunction with a single constraining layer, other constructions are possible. For example, different damping materials may be stacked upon each other in multiple layers with a single outermost constraining layer. Preferably, each layer of damping material has about the same thickness. Alternatively, a constraining layer may be inserted between each adjacent layer of damping material in the stack.

In each embodiment, load beam 42 is provided with undamped opposed ends. For example, with reference to FIG. 3, damping material 54 and constraining layer 56 terminate at an edge 58 adjacent to tooling hole 60. The undamped distal end of load beam 42 facilitates attachment of flexure 46 by techniques such as laser welding, which is ordinarily difficult to use in the presence of a viscoelastic material because it can deteriorate. Other attachment methods such as ultrasonic welding and adhesive bonding may also be used. Similarly, the proximal end of load beam 42 is undamped, the damping structure terminating at an edge 61 near an edge 62 of mounting block 44. The undamped proximal end simplifies attaching the mounting block by laser welding.

The actual coverage provided by the damping structure on load beam 42 will depend on the particular application as well as the configuration of both the load beam and the suspension assembly. In a typical arrangement, the damping structure terminates about 0.2 cm before tooling hole 60 and extends to within about 0.02 cm (but not beyond) mounting block edge 62. If flexure 46 is provided and is to be secured to load beam 42 by laser welding, it is advantageous to terminate the damping structure so that it does not underlie the flexure, thereby eliminating the need to laser weld through the damping material.

One manufacturing method according to the invention that is preferred for producing the structures described above involves the steps of providing flat stock material for the desired constraining layer, cleaning the same to remove any wax, grease, dirt, dust, oil, scale or other contaminants, and then applying the damping material thereto. The damping material may be laminated to at least a portion of one or both sides of the flat stock with pressure or a heated (for example infrared) laminator. Alternatively, the damping material may be applied to the constraining layer by bar coating, doctor blade, spraying, dipping, roll coating, extrusion coating, kiss coating, hopper coating, reverse roll coating, flexographic printing, silkscreen printing, and the like. Once applied, the damping material, if necessary, is dried.

In constructions using multiple layers of damping material stacked upon each other, each layer may be successively applied by coating or lamination to the previously applied layer(s). Constraining layers may be interposed between adjacent damping material layers by coating or laminating the damping material layers to the constraining layers in alternating fashion.

The constrained layer damping structure may then be slit or cut to the desired predetermined size and bonded (using heat and/or pressure if necessary) to only a portion of clean, flat stock material for the load beam so as to provide a flat sandwich construction comprising the damping material intermediate the constraining layer and the load beam stock materials. A damping structure may also be applied to both sides of the load beam stock material. As explained more fully below, those portions of the load beam stock material that do not have damping material thereon provide the undamped opposed ends of the finished load beam.

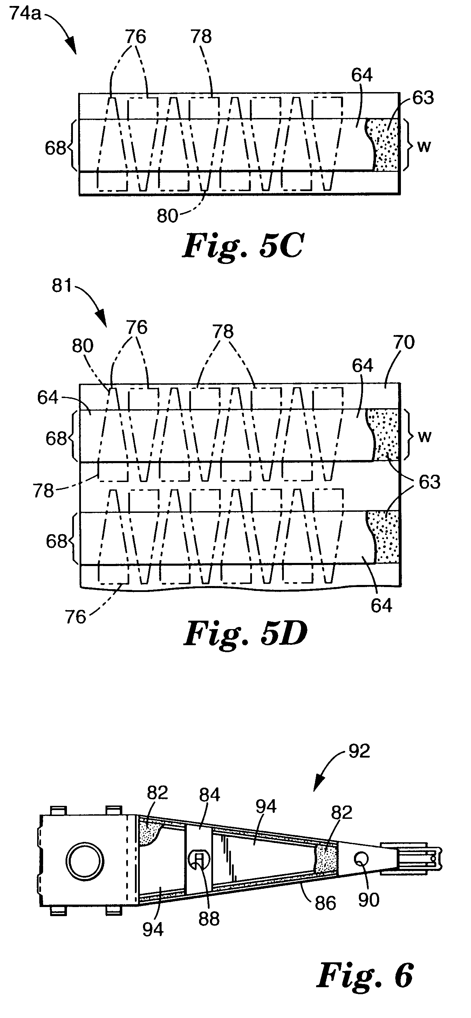

Such a process is shown schematically and sequentially in FIGS. 5A, 5B and 5C. In FIG. 5A, a damping material 63 has been applied to a constraining layer stock material 64. As used herein, "stock material" refers to a larger piece of material out of which a smaller end product and preferably a plurality of smaller finished goods will be formed. Thus the disclosed methods are particularly well suited for high volume, commercial scale, mass production manufacturing operations as opposed to labor intensive techniques in which parts are produced essentially by hand or one at a time.

Constraining layer stock 64 with damping material 63 thereon may then be cut or slit along lines 66 (shown in interrupted line in FIG. 5A) to provide a plurality of elongated strips or articles 68. If the damping structure is provided as a preformed film or roll it may be desirable to include a release liner to protect the damping material from damage or contamination before subsequent use. Strips 68 are then applied, for example by lamination, to only a portion of a load beam stock material 70 in a plurality of parallel, spaced apart stripes (as represented by strips 68) such as shown in FIG. 5B. Resulting panel 71 (FIG. 5B) may be cut or slit between each stripe along lines 72 (shown in interrupted line) into a plurality of elongated strips or members 74a, 74b, 74c and 74d. Each such member comprises flat load beam stock material with a damping structure bonded thereto and can be rolled into coil form for storage or subsequent processing.

As shown in FIG. 5C, a plurality of damped load beams 76 (illustrated schematically in interrupted line) may be formed out of each flat, sandwich construction strip (such as strip 74a) by stamping the strips, preferably in a progressive multicavity die. If desired, an individual, flat damped load beam 76 may be converted to a channel-shaped member; such as illustrated in the previous drawings, through subsequent mechanical forming operations. Load beams 76 may be formed out of strip 74a in any shape or serial arrangement. The width "w" of both damping material 63 and constraining layer stock material 64 in strip 74a is substantially equal to the length of the damping material and the constraining layer between opposed ends 78 and 80 of damped load beam 76.

Alternatively, panel 71 (FIG. 5B) need not be cut into strips 74a to 74d. Individual load beams could be provided by simultaneously stamping panel 71 along a plurality of paths, each path corresponding to one of the strips 74a, 74b, 74c and 74d, for example. In another embodiment, panel 71 could be cut or slit between only some of the stripes so as to provide "multiple width" strips (rather than "unit width" strips) that could be stamped along a plurality of paths. "Unit width" strips refer to strips such as strip 74a out of which only a single row of individual, finished damped load beams is formed. "Multiple width" strips refer to strips that are wide enough to permit the formation of more than one row of individual, finished damped load beams such as strip 81 shown in FIG. 5D. Strip 81 could be stamped along two paths, one path corresponding to each row of damped load beams 76. Strip 81 could be wide enough to accommodate three or more rows of load beams if desired.

Advantageously, the length of the damping structure is less than that of the load beam, thereby leaving undamped portions 78 and 80 (see FIGS. 5C and 5D) at opposed ends of the load beam for attaching, if desired, various associated system components such as mounting block 44 and/or flexure 46. Useful attachment methods include laser welding, ultrasonic welding, adhesive bonding and the like. Alternatively, mounting block 44 and/or flexure 46 may be formed as an integral portion of load beam 42.

Alternatively, damped suspension assemblies according to the invention may be provided by a chemical etching process in which photolithographic techniques are applied to a sandwich construction (such as panel 71, strips 74a, 74b, 74c, 74d or strip 81). More specifically a photoresist material such as an ultraviolet light sensitive organic polymer is applied to both the load beam stock side and the constraining layer stock side of the sandwich construction. The photoresist coated sandwich construction may then be heated to drive off any solvents used in the photoresist. The photoresist coated sandwich construction is then exposed on both major surfaces through a mask to, for example, ultraviolet light which alters the chemical structure of the exposed photoresist material and which transfers the pattern of the mask to the load beam and the constraining layer stock materials. Unexposed photoresist is removed leaving the mask pattern intact. The sandwich construction with the desired pattern is then exposed to a chemical etching bath that removes the load beam stock material and the constraining layer stock material that are not protected by the photoresist (as well as removing the damping material therebetween). A photoresist stripping process removes remaining photoresist residue. The result is a flat, damped load beam that can be subsequently processed through mechanical forming operations if desired.

The preferred manufacturing techniques may be used to produce any of the damped load beams described above. If the load beam comprises a web but no flanges, subsequent mechanical forming operations are not required.

The preferred manufacturing techniques overcome several difficulties associated with prior art approaches in which the damping structure is applied subsequent to the formation of individual channel-shaped load beams. According to the methods of the invention, damping material is applied to flat stock for the constraining layer (rather than individual, preformed channel-shaped load beams). Flat stock is easier to handle and subsequently process in a volume oriented, mass production environment. Also, stronger, more secure bonds between the load beam and the damping material are possible because heated laminators or coating techniques can be more readily employed to apply the damping material before the ultimate load beam is stamped, etched or otherwise formed. This is especially important when applying the damping structure to the bend radius portion of the load beam. Because improved bond strength is achieved, stiffer damping materials, which traditionally have been very difficult to apply to preformed load beams having both a web and flanges may be used. The preferred manufacturing operations described herein are believed to be less labor intensive and less expensive than presently used techniques. It is further believed that enhanced production yields, decreased production costs, and reduced product variability will result.

Also, the flexure and the mounting block may be readily attached directly to the load beam because the ends of the load beam are not damped. Laser welding is a particularly preferred attachment method but heretofore has not been practical because of the need to weld through the damping material which can degrade the damping material and result in inferior bonds.

More accurate placement of the damping structure on the load beam is also possible. For example, and with reference to FIG. 6, damping material 82 may be selectively applied to web 84 of load beam 86 to, for example, avoid tooling holes 88 and 90 thereby providing damped load beam 92. Damping material 82 underlies constraining layer 94.

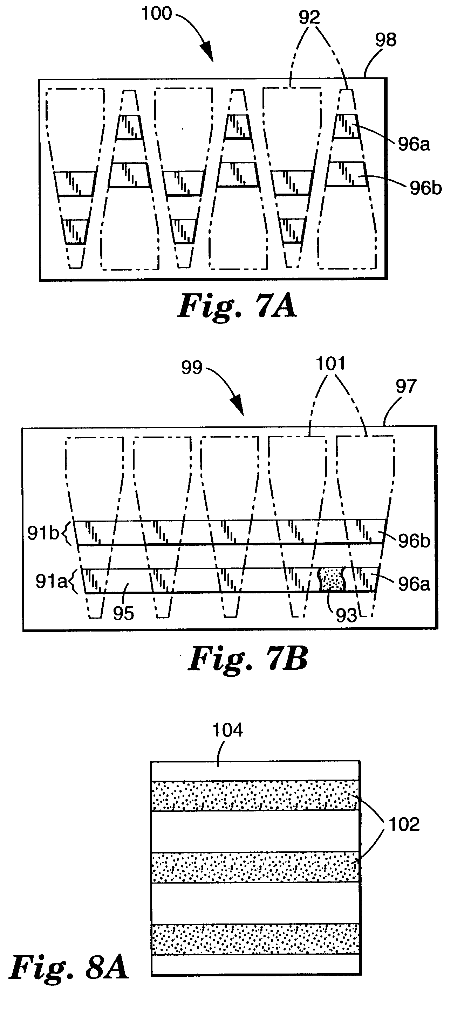

Such damped load beams may be made by the process shown in FIG. 7A. The panel of FIG. 5A comprising damping material 63 that has been applied to constraining layer stock 64 is fabricated (for example by stamping) into a series of predetermined shapes 96a and 96b that are applied to only a portion of load beam stock material 98. Damped load beam 92 (shown schematically in FIG. 7A in interrupted line) may then be formed by stamping or chemically etching panel 100. The pattern formed by damping material 82 on load beam 86 is the pattern of predetermined shapes 96a and 96b.

Alternatively, as shown in FIG. 7B, individual, narrow, relatively closely spaced apart damping structure stripes 91a and 91b, each comprising a damping material 93 and a constraining layer 95, may be applied to a load beam stock material 97. The resulting panel 99 may be stamped or chemically etched to provide damped load beams 101 (shown in interrupted line in FIG. 7B) having undamped end portions. Predetermined shapes 96a and 96b correspond to, respectively, damping structure stripes 91a and 91b. If panel 99 is to be stamped, it is preferable that individual damped load beams 101 be stamped in serial, parallel fashion, as shown in FIG. 7B.

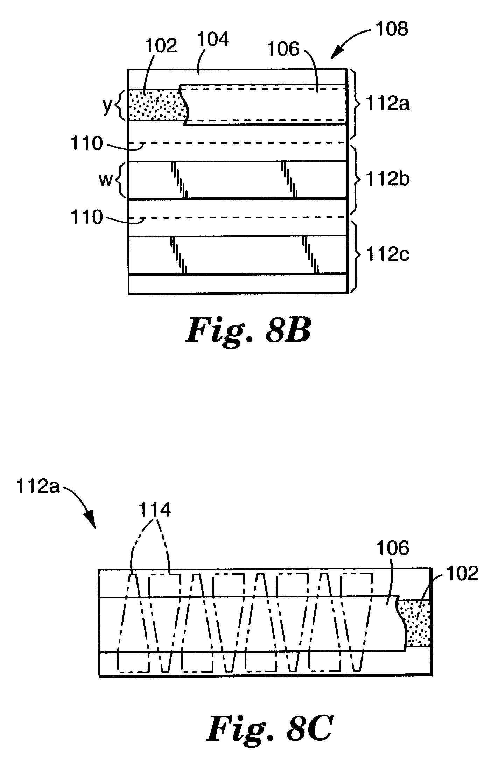

In another manufacturing method according to the invention, and as shown in FIGS. 8A to 8C, damping material 102 may be applied by coating or lamination to clean, flat load beam stock material 104 in a series of parallel, spaced apart stripes (FIG. 8A) followed by the lamination of strips of clean, flat constraining layer stock material 106 to the damping material (FIG. 8B). Advantageously, strips 106 may be cut to have a width "w" which is slightly greater than the width "y" of the damping material so as to prevent "squeeze-out" of the damping material beyond the perimeter of the constraining layer. Panel 108 (FIG. 8B) may then be slit or cut along lines 110 (shown in interrupted line) to provide a series of "unit width" strips 112a, 112b, and 112c. (Such strips may also be "multiple width.") The strips may then be processed by stamping or etching to form one or more damped load beams 114 (shown in interrupted line) having undamped opposed ends in the manner described above.

While less preferred than the manufacturing techniques described above, the method of FIGS. 8A to 8C offers many of the advantages discussed previously with regard to the more preferred manufacturing approaches.

It will be understood that while the invention has been described as having particular utility in the manufacture of computer disk drive systems, the invention is not so limited. For example, the disclosed materials would be applicable to the manufacture of optical recording system components that are subject to resonant vibrations.

Reasonable variations or modifications are possible within the scope of the foregoing specification and drawings without departing from the invention which is defined in the accompanying claims.

## Claims

1. Method of making a damped load beam for a suspension assembly, the damped load beam having opposed ends and comprising a load beam, a layer of damping material bonded to the load beam between the opposed ends, and a relatively stiff constraining layer bonded to the damping material, wherein the load beam opposed ends are suitable for supporting other components associated with the suspension assembly and at least one of the opposed ends does not have damping material bonded thereto, the method comprising the steps of:
(a) providing clean, flat stock material for a first constraining layer,
(b) applying a first layer of damping material to at least a portion of the first constraining layer stock material,
(c) providing clean, flat stock material for the load beam,
(d) bonding the first damping material to only a portion of the load beam stock material thereby providing a flat sandwich construction comprising the first damping material intermediate the first constraining layer stock material and only a portion of the load beam stock material and
(e) subsequently forming the damped load beam from the flat sandwich construction such that a portion of the load beam stock material that does not have the first damping material thereon provides the at least one opposed end of the load beam that does not have the first damping material bonded thereto.

2. Method according to claim 1 characterized in that the width of the first layer of damping material on the first constraining layer stock material is substantially equal to the length of the first layer of damping material between the opposed ends of the damped load beam.

3. Method according to claim 1 or 2 characterized by the step of slitting the flat sandwich construction of step (d) into a plurality of members.

4. Method according to claim 3 characterized in that each member is an elongated strip.

5. Method according to claim 4 characterized in that the damped load beam is formed by stamping one of the elongated strips.

6. Method according to claim 4 or 5 characterized in that a plurality of damped load beams is formed by stamping one of the elongated strips.

7. Method according to any one of claims 1 to 6 characterized in that the first damping material and the first constraining layer stock material are bonded to the load beam stock material in a plurality of parallel, spaced apart stripes.

8. Method according to claim 7 characterized by the steps of slitting the load beam stock material between at least some of the stripes to provide a plurality of flat sandwich construction articles, each article comprising the first damping material intermediate the load beam stock material and the first constraining layer stock material, and stamping the damped load beam in step (e) out of one of the flat sandwich construction articles.

9. Method of making a damped load beam for a suspension assembly, the damped load beam having opposed ends and comprising a load beam, a layer of damping material bonded to the load beam between the opposed ends, and a relatively stiff constraining layer bonded to the damping material, wherein the load beam opposed ends are suitable for supporting other components associated with the suspension assembly and at least one of the opposed ends does not have damping material bonded thereto, in particular according to any one of the preceding claims the method comprising the steps of:
(a) providing clean, flat stock material for the load beam,
(b) applying a layer of damping material to the load beam stock material in a series of parallel, spaced apart stripes thereby leaving portions of the load beam stock material without damping material thereon,
(c) applying clean, flat stock material for the constraining layer to each stripe of damping material, thereby forming a flat sandwich construction comprising the damping material intermediate the load beam and constraining layer stock materials and
(d) subsequently forming the damped load beam from the flat sandwich construction such that a portion of the load beam stock material that does not have the first damping material thereon provides the at least one opposed end of the load beam that does not have the first damping material bonded thereto.

10. Method according to claim 9 characterized by the step of slitting the flat sandwich construction of step (c) between the stripes of damping material to form a plurality of members.

11. Method according to claim 3 or 10 characterized in that the damped load beam is formed by stamping or chemically etching one of the members.

12. Method according to claim 3, 10 or 11 characterized in that a plurality of load beams is formed by stamping or chemically etching one of the members.

13. Method according to any one of claims 1 to 12 characterized in that the damped load beam is subsequently formed by stamping or chemically etching the flat sandwich construction.

14. Method according to any one of claims 1 to 13 characterized in that a plurality of damped load beams is formed by stamping or chemically etching the flat sandwich construction.

15. Method according to any preceding claim characterized by an additional step of laser welding a flexure to one of the opposed ends of the load beam that does not have the first damping material bonded thereto.

16. Method according to any preceding claim characterized by a step of attaching a mounting block to one of the opposed ends of the load beam that does not have the first damping material bonded thereto.

17. Method according to claim 15 or 16 characterized in that neither opposed end of the load beam has the first damping material bonded thereto and further comprising a step of attaching a flexure to the other opposed end.

18. Method according to claim 17 characterized in that the flexure is attached by laser welding.
